# EUROPEAN PATENT SPECIFICATION

(11) **EP 2 112 127 B1**
(45) Date of publication and mention of the grant of the patent: **06.11.2013**
(21) Application number: 08703699.2
(22) Date of filing: 23.01.2008
(51) Int. Cl.: B82Y 30/00, C04B 35/626, C04B 35/645, H01S 3/113, C04B 35/443, G02B 1/02

(54) **TRANSPARENT SPINEL CERAMICS, METHOD FOR PRODUCTION THEREOF, AND OPTICAL MATERIAL USING THE TRANSPARENT SPINEL CERAMICS**
TRANSPARENTE SPINELLKERAMIKEN, HERSTELLUNGSVERFAHREN DAFÜR UND OPTISCHES MATERIAL UNTER VERWENDUNG DER TRANSPARENTEN SPINELLKERAMIKEN
CÉRAMIQUES TRANSPARENTES DE TYPE SPINELLES, LEUR PROCÉDÉ DE FABRICATION ET MATÉRIAU OPTIQUE UTILISANT LES CÉRAMIQUES TRANSPARENTES DE TYPE SPINELLES

(30) Priority: 23.01.2007 JP 2007012632
(43) Date of publication of application: 28.10.2009
(73) Proprietor: World Lab. Co., Ltd., Aichi 456-0023 (JP)
(72) Inventor: IKESUE, Akio, Nagoya-shi Aichi 456-0023 (JP)
(74) Representative: Sawodny, Michael-Wolfgang
(86) International application number: PCT/JP2008/050858
(87) International publication number: WO 2008/090909

(56) References cited:
- EP-A1- 0 332 393
- EP-A1- 0 334 760
- EP-A1- 1 873 129
- WO-A1-2006/061225
- JP-A- 2 018 354
- JP-A- 6 172 024
- JP-A- 03 247 559
- JP-A- 2001 002 413
- JP-A- 2006 273 679
- US-A1- 2005 164 867
- KISEL V.E. ET AL.: 'Passive Q switches for a diode-pumped erbium glass laser' QUANTUM ELECTRONICS vol. 35, no. 7, July 2005, pages 611 - 614, XP008111353

## Description

### TECHNICAL FIELD

The present invention relates to a transparent spinel ceramic comprising a polycrystal, to a method for manufacturing the transparent spinel ceramic, and to an optical material using the ceramic.

### BACKGROUND ART

Spinel is a mixed oxide represented by composition formula MgAl₂O₄. Spinel has excellent thermal resistance and corrosion resistance, and thus is used in, for instance, high-temperature members and in cement, and as a refractory material in the iron and steel industry.

By virtue of its excellent optical characteristics, spinel is also used in decorative articles and as a window material or the like in the visible to infrared region, mostly in the form of a single crystal. Single-crystal materials have less scattering and better transmission characteristics than polycrystals (hereafter referred to also as "ceramics"). Therefore, virtually no spinel polycrystals are used as industrial materials.

Translucent spinels have been widely reported. However, the sample thickness in the reported spinel ceramics is extremely small, and definite descriptions of the optical constants of these spinel ceramics are almost nowhere to be found.

Non-patent document 1 introduces the world's highest-quality spinel ceramic. The transmittance of this spinel ceramic in the visible to infrared regions is extraordinarily good. Closer review of the data, however, reveals that optical loss in the spinel ceramic is not only of 5 to 11%/cm (0.5 to 1.1%/mm), but also but may even reach 210%/cm (21%/mm) at 250 to 200 nm in the UV region. Such a spinel ceramic is thus not found to be necessarily exceptional as an optical material.

There are two methods for synthesizing conventional translucent spinel: 1) a method of subjecting a raw material powder of a mixture of MgO and Al₂O₃ to solid-phase reaction sintering (for instance, non-patent document 2); and 2) a method of sintering a homogeneous spinel powder obtained through wet synthesis (for instance, non-patent documents 3 and 4). In these documents, translucent spinel is obtained by adding small amounts of sintering aids to a raw material powder and by carrying out sintering under appropriate conditions.

However, as described above and as reported by the NIST (National Institute of Standard and Technology), major technical problems remain unresolved in even the world's best transparent spinel ceramic.
Non-patent document 1: SPIE Microlithography 31, San Jose, 23 February 2006
Non-patent document 2: Kenya HAMANO, Shuzo KANZAKI, "Fabrication of transparent spinel ceramics by reactive hot-pressing", Journal of the Ceramic Association, 85 [5] 225-30 (1977).
Non-patent document 3: John H. Burnett et al., "High-Index Materials for 193 nm Immersion Lithography", Proceeding of SPIE Vol. 5754-Optical Microlithography XVIII, 1-11 (2006).
Non-patent document 4: William J. Tropf et al., "Magnesium Aluminum Spinel (MgAl2O4)," in Hand book of Optical Constants of Solids II, edited by E. D. Palik (Academic Press, New York, 1998) 883-897.

US 2005/0164867 A1 is directed to a transparent polycrystalline sintered ceramic with cubic crystal structure comprising a real in-line transmission RIT > 75% of the theoretical maximum value measured on 0.8 mm-thick polished plates and for a light of a wavelength between 600 and 650 nm. The average grain size D is in the range of 60 nm < D < 10 µm. The addition of magnesium fluoride and aluminium fluoride is not described.

EP 0 334 760 A1 describes a process for making high performance objects from magnesium aluminate spinel, especially objects transparent in the infrared and visible light range. This manufacturing process is characterised in that it comprises the stages of: preparation of a consolidated preform or test piece by cold compression, from a powder of this ceramic material to which a weight excess of 0.5 % to 5 % of magnesia MgO has been added beforehand, subjecting this preform to a natural sintering to obtain a degassed product of low closed porosity, and carrying out the postdensification and homogenisation of this preform by isostatic compression with heating. The addition of magnesium fluoride and aluminium fluoride is not described.

JP 2001-2413 discloses producing a magnesia spinel powder which has excellent sinterability and can be sintered into a dense sintered body by blending aluminum hydroxide, magnesium hydroxide, and a mineralizer, firing and then crushing and also discloses using aluminum fluoride and/or magnesium fluoride as the mineralizer and making the blending quantity thereof approximately 0.3 to 3 parts by weigt relative to 100 parts by weight of the primary components.

Ordinarily, the main issue in the development of conventional translucent spinel ceramics has been the manufacture of a material having excellent transmission characteristics in the visible and/or infrared regions. In reality, however, spinel ceramics suffer from very high light scattering, and exhibit thus poorer optical characteristics than single-crystal spinel.

The degree of light scattering depends on the transmission wavelength (light scattering abates at longer wavelengths). As a result, translucent spinel having insufficient optical characteristics has been confined ordinarily to be used as an infrared window material. It would therefore be desirable to develop a spinel ceramic having better characteristics, but there are currently no technologies that could represent a breakthrough in this regard.

Ordinarily, single-crystal spinel can be manufactured in accordance with, for instance, a Verneuil process, a Czochralski process, or by EFG. The transmittance of single-crystal spinel in the visible to infrared regions is very high. When the prepared single-crystal material is observed through a polarizing plate, the material exhibits substantial birefringence, while transmitted wavefront reveals fringes (i.e. refractive index variations). Single-crystal spinel cannot thus be regarded as having sufficient optical characteristics. As discussed above, almost no UV radiation passes through ordinary transparent spinel ceramics. Even the world's best spinel ceramic, as reported by NIST, has poor transmission characteristics towards UV radiation. Single-crystal materials suffer also the problem of insufficient transmission characteristics towards UV radiation, on account of, for instance, trapped impurities during the preparation of the raw material and during growth, and on account of crystal defects generated during growth. In particular, no single-crystal materials can be used at all, at present, in applications where UV radiation is the light source, as in lithography or the like. Spinel has the ability of letting infrared radiation through, up to about 5 µm. However, even conventional high-quality transparent spinels suffer from scattering in the infrared region. Therefore, it is difficult to use transparent spinel in, for instance, lasers, laser Q-switch materials or the like, where scattering tolerances are extremely narrow, and no examples of such a use have been reported. When doped with a transition metal element, spinel develops a coloring that is specific of the doping element, and hence spinel, although a ceramic, is also used in jewelry articles. Thus far, however, material transparency has been very poor, and hence it has proved difficult to provide practicable products in this technical field.

It is an object of the present invention to provide a spinel ceramic that is conceptually different from a conventional translucent ceramic and that has extremely high optical characteristics. More specifically, it is an object of the present invention to provide a functional element in the passive and active fields, in the UV region, from 190 nm upwards, through the visible region, and up to 5 µm in the infrared region; to provide an optical element deemed unrealizable hitherto; and to provide a device technology using the optical element.

Numerous crystal grain boundaries exist in a polycrystal, and thus the optical loss in a polycrystal is greater than that in a single crystal. Therefore, it is extremely difficult for polycrystals to be used in ordinary optical materials, and even more so in lasing media or in optical materials used for lithography employing excimer lasers, F₂ lasers or the like as light sources, where requirements are stricter. For these reasons, the use of single crystals has been deemed to be most appropriate.

As a result of diligent research, however, the inventors have found that it is possible to provide a high-quality optical material, unrealizable not only by conventional spinel ceramics but also by spinel single crystals, that affords the effects of dramatically reducing the number of residual pores that constitute scattering sources, forming clean grain boundaries, and forming a homogeneous material having little compositional variation, by, in particular, (1) using a starting raw material of specific granularity and having excellent sinterability; (2) adding an appropriate amount of fluoride as a sintering aid; (3) controlling the ratio between two fluorides so as to lie within a given range; (4) keeping the Al/Mg ratio of the spinel to a given level; and (5) carrying out vacuum sintering or HIP at an optimal temperature.

Specifically, the present invention relates to the below-described transparent spinel ceramic, to a method for manufacturing the transparent spinel ceramic, and to an optical material using the transparent spinel ceramic.
1. A transparent spinel ceramic:
   (1) having a crystal structure substantially consisting of spinel cubic crystals;
   (2) having an average grain size of 5 to 250 µm; and
   (3) having, when formed into a sample having a thickness of 10mm, an in-line transmittance of 70% or more based on the baseline of transmission spectrum, at wavelengths of 600 nm and 3200 nm, in a thickness direction of the sample,
   (4) comprising MgF₂ and AlF₃, wherein the weight ratio for MgF₂ / AlF₃ ranges from 0.2 to 5.0, and
   (5) wherein the Al/Mg atomic ratio in the overall ceramic ranges from 2.4 to 1.6.
2. The transparent spinel ceramic according to claim 1, comprising 0.1 to 1.5wt% of MgF₂ and AlF₃.
3. The transparent spinel ceramic according to claim 1, comprising more than 0wt% and not more than 1wt% of a transition metal oxide.
4. The transparent spinel ceramic according to claim 3, which is colored in the visible region.
5. The transparent spinel ceramic according to claim 1, having an internal loss not greater than 10% / cm for light having a wavelength of 1000 nm.
6. The transparent spinel ceramic according to claim 1, having birefringence not greater than 1% by a strain inspection instrument, and having a refractive
7. The transparent spinel ceramic according to claim 1, having Q-switching function of laser having an oscillation wavelength in a 1.3 to 1.7 µm region.
8. The transparent spinel ceramic according to claim 1, having, when formed into a sample having a thickness of 10 mm, an in-line transmittance of 50% or more based on the baseline of transmission spectrum, at a wavelength of 200 nm, in a thickness direction of the sample.
9. An optical material, comprising the transparent spinel ceramic according to claim 1.
10. A decorative material, comprising the transparent spinel ceramic according to claim 1.
11. A method for manufacturing a transparent spinel ceramic according to claim 1, comprising:
   (1) a first step of obtaining a powder compact by molding a spinel-containing powder having an average primary particle size of 50 to 1000 nm and comprising MgF₂ and AlF₃;
   (2) a second step of obtaining a calcined body by calcining said powder compact at 500 to 800°C;
   (3) a third step of obtaining a fired body by sintering the calcined body at 1400 to 1800°C; and
   (4) a fourth step of obtaining a pressed sintered body by high-pressure sintering of the fired body at 1500 to 2000°C.
12. The manufacturing method according to claim 11, wherein the spinelization ratio in said spinel-containing powder is not lower than 70wt%.

The present invention allows providing a transparent spinel ceramic having high optical performance. The spinel ceramic according to the present invention does not exhibit the poor optical quality of ceramics of identical composition reported thus far, but is comparable or superior to single-crystal spinel in the visible to infrared regions, and exhibits also superior optical characteristics not found in single crystals. Therefore, although the applications of conventional ceramics and single-crystal spinels were considerably limited, the spinel ceramic of the present invention boasts dramatically improved optical characteristics, and can hence be used in optical elements for UV transmission, which was difficult to achieve even with known single-crystal materials. The spinel ceramic of the present invention, moreover, is superior to known technologies as regards optical loss and high optical homogeneity, and hence, the high-performance spinel ceramic of the present invention exhibits very small refractive index variation or birefringence component when used as an optical element. The invention, therefore, succeeds in providing a technology characterized by, for instance, allowing accurate transmission of optical information through the element.

The transparent spinel ceramic of the present invention can display hitherto unknown optical characteristics in terms of an in-line transmittance of 70% or more for light having a wavelength of 600 nm and 3200 nm, even with sample thicknesses up to 10 mm.

Groundbreaking optical characteristics refers herein to exhibiting, for instance, at least one of the following characteristics: 1) birefringence component no greater than 1% by a strain inspection instrument; 2) refractive index variation Δn no greater than 10⁻³ over 90% or more of a sample surface area; 3) transmission loss inside the material no greater than 10%/cm in the visible to infrared regions; and 4) optical transmissivity of 50% or more for a sample 10 mm thick, also in the 200 nm UV region.

Overall, the performance of conventional spinel ceramics cannot compare to the above-described performance, which is superior even to that of single-crystal materials.

In the present invention, a pure spinel ceramic (colorless transparent spinel ceramic comprising no transition metal or the like) can be used in UV transmissive materials, for instance in lithography, and in lenses, prisms and transmissive materials, in the visible to infrared regions, in ordinary optical systems, as well as in jewelry articles.

The spinel ceramic of the present invention can also be used as a transparent spinel ceramic of various colors through doping of the spinel ceramic with a transition metal element. Such colored ceramics are used in, for instance, jewelry articles and color filters. In particular, a Co-doped spinel ceramic comprising no more than 1wt% of Co exhibits capabilities of a novel passive Q-switch element in the eye-safe region (1.5 µm). This optically superior spinel ceramic can thus be potentially used in all manner of novel applications.

The manufacturing method of the present invention allows generating the transparent spinel ceramic in industrial scale. Materials that can be used in various optical applications are polycrystalline ceramics, which do not require prolonged crystal growth, as is the case in single-crystal manufacturing. Hence, such materials allow realizing both manufacturing time and mass production, and enable near-net shaping of domes, lenses, prisms and the like. In turn, this allows reducing dramatically processing costs after manufacture of the material. It becomes also possible to provide composite materials of complex structure having plural compositions, and to impart, in addition, high optical performance (UV transmission, low scattering loss, homogeneous optical quality (minimal Δn and strain), laser Q-switches), which was hitherto unrealizable by spinel ceramics and/or spinel single crystals.

The spinel ceramic obtained in accordance with the manufacturing method of the present invention is manufactured using sintering techniques, and can therefore be made into the necessary element shape by near-net shaping. This allows shaping also optical elements that are difficult to work, in an economically effective manner, while overcoming various technical problems that working involves, in terms of, for instance, lowered material yields, reducing working costs, and reducing the optical strain that working elicits inside the material (impaired optical quality). Such a spinel ceramic can thus overcome the problems of conventional ceramic materials and single-crystal materials.
The transparent spinel ceramic of the present invention having the above characteristics can be used in a wide variety of applications that include, for instance, UV transmitting materials employed in lithography and the like, lenses, prisms and transmission window materials in the visible to infrared regions, as well as in jewelry articles, color filters and laser Q-switches.

### BEST MODE FOR CARRYING OUT THE INVENTION

1. A transparent spinel ceramic:
   (1) having a crystal structure substantially consisting of spinel cubic crystals;
   (2) having an average grain size of 5 to 250 µm; and
   (3) having, when formed into a sample having a thickness of 10mm, an in-line transmittance of 70% or more based on the baseline of transmission spectrum, at wavelengths of 600 nm and 3200 nm, in a thickness direction of the sample,
   (4) comprising MgF₂ and AlF₃, wherein the weight ratio for MgF₂ / AlF₃ ranges from 0.2 to 5.0, and
   (5) wherein the Al/Mg atomic ratio in the overall ceramic ranges from 2.4 to 1.6.
The transparent spinel ceramic of the present invention comprises mainly a polycrystal of a mixed oxide represented by composition formula MgAl₂O₄. The theoretical atomic ratio of Al/Mg in the ceramic as a whole is 2.00. This value must be controlled, since both above and below the value there occur point defects (pure atomic vacancies) or antisite defects (substitution of an excess cation in a missing cation site) in the spinel crystal, which give rise to optical defects (absorption in the UV region).

Preferably, the ceramic comprises essentially solely a mixed oxide crystal phase denoted by the above-mentioned MgAl₂O₄. The above-mentioned atomic ratio in the overall ceramic ranges from 2.4 to 1.6, in particular from 2.1 to 1.9. Besides unreacted MgO or unreacted Al₂O₃, MgF₂, and AlF₃ may be present, however, the composition may comprise as well a transition metal oxide component, in amounts such that optical characteristic criteria are satisfied.

The ceramic comprises the fluorides MgF₂ and AlF₃. These are used mainly as sintering aids during manufacture, but may also contribute to improving optical characteristics. The content of fluoride is not particularly limited, but ranges preferably, in particular, from 0.1 to 1.5wt%. In the present invention, the ceramic comprises MgF₂ and AlF₃, with the weight ratio MgF₂/AlF₃ ranging from 0.2 to 5.0. Transmission characteristics can be enhanced thereby, particularly in the UV region.

When colorability is required in the ceramic, for instance, a transition metal oxide is preferably present in an amount greater than 0wt% but no greater than 1wt% (in particular, not less than 0.005wt% but not more than 1wt%). As the transition metal oxide there may be used one or more oxides comprising one or more transition metal elements such as Co, Fe, Ni, Cr, Mn, Ti or the like. The effect of enabling color in the visible region (i.e. imparting color centers (light absorption)) can be achieved depending on the transition metal oxide content. In particular, the ceramic comprises preferably at least cobalt oxide, as far as imparting Q-switch capability to the ceramic of the invention is concerned.

The crystal structure of the transparent spinel ceramic comprises essentially a cubic crystal (spinel crystal). The proportion of cubic crystal in the ceramic is preferably not lower than 99vol%, and is in particular 100vol%. A structure having a very small birefringence component can be achieved by such a composition.

The average grain size of the crystal grains in the crystal structure ranges ordinarily from 5 to 250 µm, preferably from 10 to 150 µm, and more preferably from 30 to 150 µm. An average grain size smaller than 5 nm results in greater light scattering on account of the more numerous grain boundaries. When the average crystal grain size exceeds 250 µm, impurity components are likelier to separate at grain boundary portions, and residual pores are likelier to remain in the grains or at the grain boundary portions, all of which results in, for instance, light scattering as well as impaired thermomechanical characteristics. The average grain size in the present invention denotes the arithmetic average value of the long diameters of 100 crystal grains in a field of view arbitrarily selected by observation under a scanning electron microscope or an optical microscope.

When formed into a sample having a thickness of 10 mm, the transparent spinel ceramic of the present invention has an in-line transmittance of 70% or more, preferably of 75% or more, more preferably of 80% or more based on the baseline of transmission spectrum at wavelengths of 600 nm and 3200 nm (in particular, the range from 600 nm to 3200 nm), in a thickness direction of the sample. When in-line transmittance is smaller than 70%, light scattering becomes extremely large, which makes it difficult to use the transparent spinel ceramic in, for instance, applications of the present invention. In the present invention, "baseline" in a wavelength-transmittance transmission spectrum denotes the transmission spectrum as-is, in the absence of dopant absorption, and denotes an hypothetical spectrum obtained by extrapolating the case that the adsorption is not present, when there is dopant absorption. In the present invention, the in-line transmittance is a value measured employing a commercially available spectrometer "Spectrometer U3500"(by Hitachi), using a φ 15 mm sample (diameter of arbitrary size) 10 mm thick and having the surface roughness Rms thereof polished to 5 nm or less, with a slit width of the spectroscope ranging from 0.2 to 5 nm and a scan speed ranging from 60 to 600 nm/min.

Preferably, the transparent spinel ceramic of the present invention has an internal loss no greater than 10%/cm for light having a 1000 nm wavelength. In the present invention, the internal loss is a value measured employing a commercially available spectrometer "Spectrometer U3500"(by Hitachi). Specifically, samples of dissimilar thickness are prepared with identical polishing precision of the sample surface. For instance, samples having a thickness of 1 mm and 11 mm are prepared. Since the difference in the thickness of the samples is 1 cm, the difference in transmittance per 1 cm of sample thickness between the samples corresponds to the above-mentioned internal loss. The sample thickness is not limited to 1 mm and 11 mm. Internal loss can be obtained by measuring the transmittance of samples having dissimilar thicknesses, and by converting then the transmittances into transmittance differences per unit thickness of the samples. Alternatively, an AR (antireflective coating) may be applied to optically polished samples, and then the internal loss may be obtained by measuring the transmittance of the samples (the AR coated samples have no surface reflective loss, only internal loss) and the thickness of the samples. For a scattering-free sample exhibiting 100% transmittance, internal loss is given by (100-measured transmittance)%/sample thickness). In another method, there may be obtained the relationship between the transmittance of optically polished samples and sample thickness. Although varying depending on the wavelength, the surface (two-surface) reflective loss of the spinel material ranges from 14 to 13%. The theoretical transmittance of spinel ranges from 87 to 86%. Internal loss can be easily measured based on the relationship between sample thickness and difference between the theoretical transmittance and the transmittance of actually prepared samples.

The birefringence of the transparent spinel ceramic of the present invention, by a strain inspection instrument, is no greater than 1%. The refractive index variation Δn, using an interferometer, is preferably no greater than 10⁻³ over 90% or more of a measurement surface. These characteristics result in little optical fluctuation and allow increasing the quality of transmitted light, and make the transparent spinel ceramic of the present invention suitable for ordinary optical applications.

Preferably, the transparent spinel ceramic of the present invention has a capability of Q-switching of laser having an oscillation wavelength in the 1.3 to 1.7 µm region, through doping with Co (Co²⁺). A transparent spinel ceramic with these characteristics can be used for a passive Q-switch element of laser having function for saturable absorption.

When formed into a sample having a thickness of 10 mm, the transparent spinel ceramic of the present invention has preferably an in-line transmittance of 50% or more based on the baseline of transmission spectrum, at a wavelength of 200 nm, in a thickness direction of the sample. The reasons for this are as follows. Lens materials having higher refractive indices than conventional materials must be developed in order to realize patterns having fine features of no more than 32 nm and that can be resolved by next-generation ArF immersion lithography (used wavelength 193 nm). Novel lens materials having refractive indices in excess of 1.8 to 1.9 are likewise indispensable. Spinel is an important material having very high refractive index of 1.92 at the wavelength regions used in lithography. Spinel, though, is difficult to used in this field, unless the transmittance thereof is at least 50% or higher at 200 nm, as indicated in the present invention. The characteristics of the transparent spinel ceramic of the present invention are thus significantly superior to those of conventional spinel ceramics, in terms of being able to be employed in lithography using UV radiation at the 190 nm region.

### 2. Method for manufacturing a transparent spinel ceramic

The transparent spinel ceramic of the present invention is preferably manufactured in accordance with the method below. Specifically, a method for manufacturing a transparent spinel ceramic, comprising:
(1) a first step of obtaining a powder compact by molding a spinel-containing powder having an average primary particle size of 50 to 1000 nm and comprising MgF₂ and AlF₃;
(2) a second step of obtaining a calcined body by calcining said powder compact at 500 to 800°C;
(3) a third step of obtaining a fired body by sintering the calcined body at 1400 to 1800°C; and
(4) a fourth step of obtaining a pressed sintered body by sintering of the sintered body at 1500 to 2000°C under pressure.

The present invention encompasses a transparent spinel ceramic obtained in accordance with the above-described manufacturing method.

### First step

In the first step a powder compact is obtained by molding a spinel-containing powder having an average primary particle size of 50 to 1000 nm and comprising MgF₂ and AlF₃.

The primary particle size of the spinel-containing powder used in the present invention ranges preferably from 50 to 1000 nm, in particular from 50 to 500 mm. A primary particle size smaller than 50 nm makes handling difficult and is disadvantageous in terms of, for instance, 1) difficult molding, 2) low density of the powder compact, and substantial shrinkage during sintering. A primary particle size in excess of 1000 nm results in poor sinterability of the raw materials, and makes it difficult to obtain a high-density sintered body (in other words, a transparent sintered body).

Preferably, the purity of the spinel-containing powder is not lower than 99wt%. In particular, the purity is not lower than 99.9% when the final article is intended for optical applications, such as in prisms and lenses, and in lithography. Purity denotes herein the components that make up the target spinel.

The spinelization ratio (weight ratio of spinel structure relative to total raw material) of the spinel-containing powder is preferably not lower than 70wt%.

The fluorides MgF₂ and AlF₃ are blended, as sintering aids, into the spinel-containing powder. Blending of the fluorides allow achieving yet superior sinterability, coupled with excellent optical characteristics. The blending amount of fluorides is not particularly limited, but may range usually from 0.1 to 1.5wt% in the spinel-containing powder. Both MgF₂ and AlF₃ are added to the powder in order that a MgF₂/AlF₃ weight ratio ranges from 0.5 to 2.0, with a view to improving the optical characteristics in the UV region, as explained in above 1. The Al/Mg ratio can be controlled to a predetermined ratio by analyzing beforehand the Al/Mg ratio in the prepared spinel raw material, for instance by X-ray fluorescence, ICP or the like, and by adding the MgO or Al₂O₃ raw material accordingly.

To develop coloring, a given amount of a transition metal oxide powder can be added to the spinel-containing powder.

Mixing of these raw materials can be accomplished by using ordinary mixing and grinding media in a pot mill or the like (preferably, the grinding medium used is a single medium from among MgO, Al₂O₃ and spinel, although the foregoing may also be used in combination). In addition to the spinel raw materials, the pot mill may also be charged, as the case may require, with at least one among a sintering aid such as AlF₂ and/or MgF₂, a dispersant, a binder or the like. Pure water or alcohol may further be used as solvents, and mixing may proceed for several hours to several tens of hours.

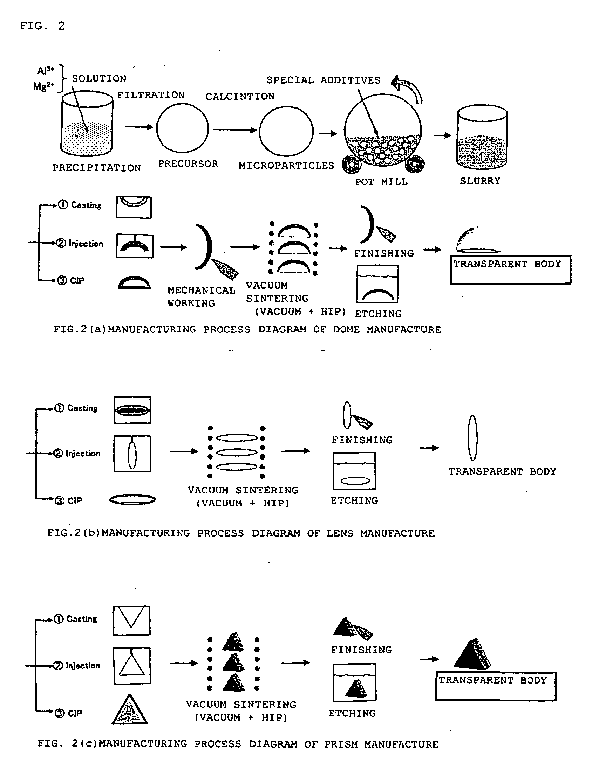

The obtained slurry may be molded as-is, or may be molded after solids recovery, following solid-liquid separation. The molding method used is not particularly limited, and may involve, for instance, cast molding, extrusion molding, injection molding or the like, as illustrated in Fig. 2.

In the present invention, granules of several tens of µm are formed through solvent removal and granulation using a spray dryer. Thereafter, the prepared granules are primary-molded in a predetermined mold, and are then secondary-molded in a CIP (cold isostatic press), to suitably manufacture thereby a powder compact.

### Second step

In the second step, the compact is calcined at 500 to 800°C, to yield a calcined body. The purpose of the second step is to remove the added organic components (dispersant and binder). Ordinarily, the calcining atmosphere may be the atmosphere (air) or an oxidizing atmosphere. The calcination time varies depending on the calcination temperature, but ranges ordinarily from 60 to 180 minutes.

### Third step

In the third step, a sintered body is obtained by sintering the calcined body at 1400 to 1800°C (preferably at 1400 to 1650°C). The sintering atmosphere is not particularly limited, and may be, for instance, vacuum, a reducing atmosphere, an inert gas atmosphere or an oxidizing atmosphere. When firing in vacuum, the latter may range from reduced pressure to 10⁻⁵ Pa. The sintering time is not particularly limited, but may range, in particular, from about 30 to about 300 minutes. In particular, the third step is preferably performed in such a manner that the relative density of the sintered body is not lower than 90%.

### Fourth step

In the fourth step, a pressed sintered body is obtained by sintering the fired body at 1500 to 2000°C (preferably at 1700 to 1850°C) under pressure. The pressured sintering method is not particularly limited, and may involve, for instance, hot pressing, HIP (hot isostatic press) or the like. In particular, HIP can be suitably used in the present invention. For instance, a transparent spinel ceramic (a colored transparent spinel ceramic if a transition metal oxide is added) can be obtained through high-pressure sintering at 1500 to 2000°C in an HIP (hot isostatic press) for 1 hour or more at a pressure of 9.8 to 198 MPa, using Ar gas as the pressure medium.

The obtained transparent spinel ceramic can be formed into a predetermined optical element through mechanical machining. However, optical elements having complex structures or curved surfaces can be manufactured at low cost by using near-net shaping techniques such as those illustrated in Fig. 2.

### <Embodiment 1>

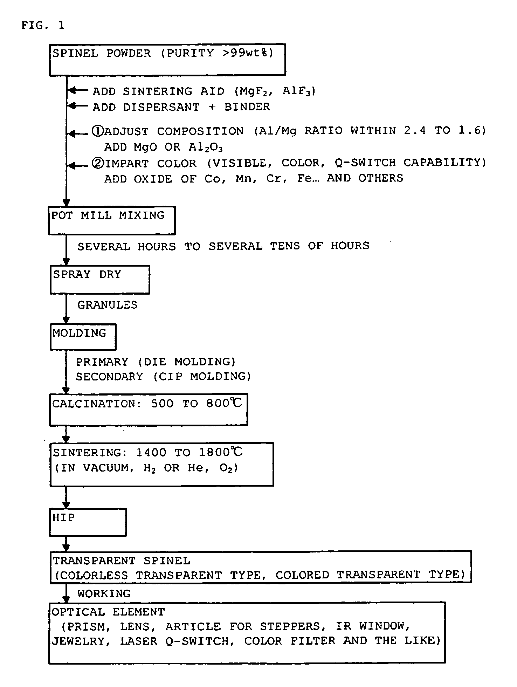

Fig. 1 illustrates a flowchart of a method for manufacturing a colorless or colored transparent spinel ceramic. The starting raw material used has a primary particle size of 50 to 1000 nm and a purity of 99wt% or more. To the raw material there is added a MgF₂ and AlF₃ sintering aid for improving compactness and transparency in the raw material, as well as a dispersant and a binder. To further enhance transparency at the UV region, it is important to add MgO or Al₂O₃ to a predetermined Al/Mg value in the overall raw material. If coloring is desired, this can be achieved by adding a required amount of a transition metal oxide. A solvent (water or alcohol) and balls (preferably, the grinding medium used is a single medium from among Al₂O₃, MgO and spinel, although the foregoing may also be used in combination) are added to the raw materials and auxiliary materials, with mixing and grinding over several hours to several tens of hours, to prepare a slurry. The prepared slurry is spray-dried in a spray drier, to prepare granules (granulate) having a size of several tens of µm. Preferably, the shape of the granules is substantially spherical (with the ratio of the shortest to longest diameter (aspect ratio: short diameter/long diameter) of the granules ranging from 0.8 to 1.00). Preferably, the granulate particles used are prepared with no less than 90% of granules having a particle size ranging from 10 to 100 µm. The molding method is not limited to press molding. There can be used, for instance, casting, extrusion or injection molding, as illustrated in Fig. 2, and not just the molding method disclosed herein. The obtained granules are charged into a mold where primary shaping is performed. The obtained powder compact is vacuum-packed, and is then charged into a CIP apparatus, where secondary shaping is carried out. Preferably, the porosity of the powder compact ranges from 60 to 40%, such that pores having a diameter of 5 µm or larger are no more than 5% of the total pores of the powder compact. The prepared powder compact is calcined at 500 to 800°C to remove organic components such as the binder. After calcination, the powder compact is sintered at a temperature ranging from 1400 to 1800°C (in vacuum, an H₂ or He atmosphere, or in an oxidizing atmosphere), to produce a sintered body having a relative density of 90% or more, preferably of 95% or more. Transparency is not yet achieved in this state, and hence HIP may be carried out over 1 hour or more at 1500 to 2000°C (pressure medium Ar, pressure range 9.8 to 196 MPa). The samples become transparent after HIP. HIP conditions affect the optical characteristics of the spinel ceramic. Therefore, these conditions are best set in accordance with the intended purpose. The obtained transparent spinel ceramic can be formed into a predetermined optical element through mechanical machining. However, optical elements having complicated structures or curved surfaces can be manufactured at low cost by using near-net shaping techniques such as those illustrated in Fig. 2.

### <Embodiment 2>

Fig. 2 illustrates examples of methods for manufacturing optical elements shaped as a dome (Fig. 2(a)), as a lens (Fig. 2(b)) and as a prism (Fig. 2(c)). Powder compacts shaped as a lens, a prism or a dome are formed by pouring the slurry into a slip casting mold, or by injecting the slurry into an injection molding mold. The subsequent manufacturing process may be carried out according to the processes illustrated in Fig. 1. In cylindrical crystals such as single crystals, a disc-like workpiece is carved out through boring and cutting to a diameter of required size, in particular in the case of a dome or a lens, whereupon the two flat surfaces must be machined into curved surfaces. Inevitably, this entails a low material yield and high costs. In a ceramic manufacturing technology such as the one of the present invention, by contrast, only surface polishing remains basically as the last process. This means not only obviously valuable in economic terms, from the viewpoint of productivity and cost, but also technical advantages such as reducing damage (strain) inside the material caused by machining.

### <Embodiment 3>

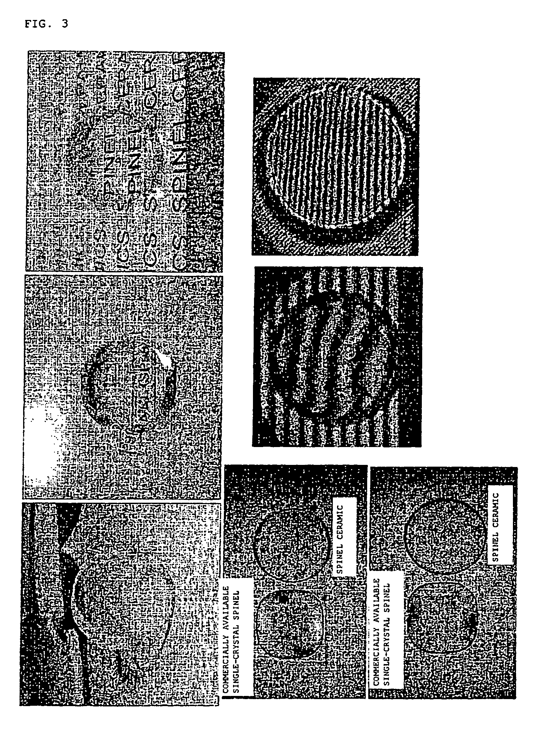

Fig. 3 shows the outer appearance, observations of optical strain (birefringence) using a polarizer, and wavefront image using a Fizeau interferometer, of prepared transparent spinel ceramics (sample thickness 10 mm, both sides optically polished). The prepared spinel ceramics have a transparency comparable to that of glass, while virtually no birefringence is observed with the polarizer. In the measurement of the wavefront images as well, the spinel ceramics exhibit straight interference fringes. No optically inhomogeneous portions are thus found. The above indicates that a spinel ceramic manufactured in the present invention boasts extremely good optical characteristics as an optical element.

### <Embodiment 4>

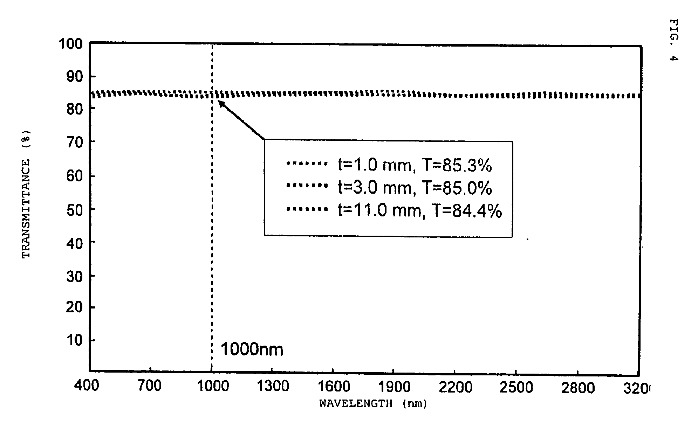

Fig. 4 illustrates transmission spectra of spinel ceramics (both sides optically polished) 1 mm, 3 mm and 11 mm thick, at wavelengths from 400 to 3200 nm. Theoretical transmittance (about 86%) is virtually achieved in all samples, which exhibit very low optical loss. The transmittances in the visible to the near infrared regions for samples having a thickness of 1 mm and 11 mm are 85.3% and 84.4%, respectively. The optical loss is hence 0.9%/cm, tantamount to virtually no loss at all in this wavelength region, and indicative of a performance that is unprecedented in spinel ceramics.

### <Embodiment 5>

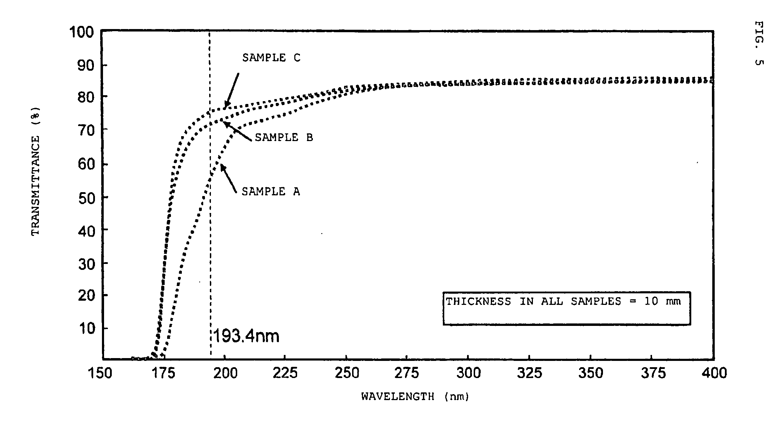

Fig. 5 illustrates the transmission spectra of spinel ceramics 10 mm thick at wavelengths from 300 to 190 nm. The thickness of the samples (tablet-shaped samples with both faces optically polished) is equalized to 10 mm. The samples are controlled such that in sample A, Al/Mg is 2.30 in the raw material base, in sample B, Al/Mg is 2.05 and in sample C, Al/Mg is 1.99. The respective manufacturing conditions are identical, within the scope of the present invention. Conventional spinel materials have a wide optical band gap but exhibit significant optical absorption in the vicinity of 200 nm, which renders such spinel materials unusable as UV transmitting materials. By contrast, the transparent spinel ceramic of the present invention has a transmittance of at least 50% or more at a wavelength of 200 nm in the UV region, and is hence a groundbreaking material having a UV-transmitting capability that was unrealizable hitherto.

### <Embodiment 6>

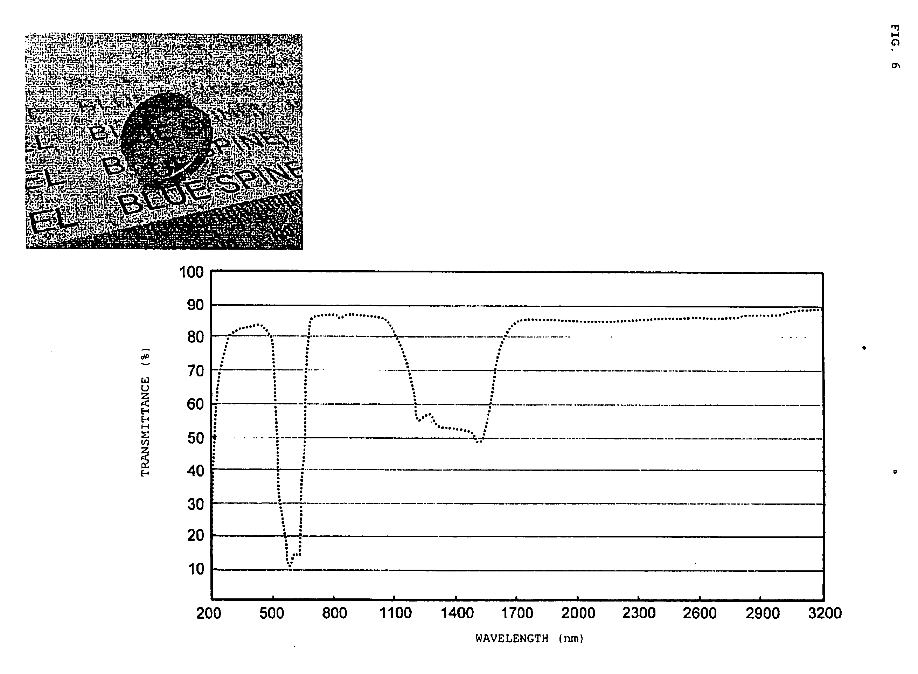

Fig. 6 illustrates an external view photograph (upper left) of a Co:spinel transparent ceramic doped with 0.01wt% of Co₃O₄, and a transmission spectrum thereof. The sample, which has a blue coloration imparted during Co doping, exhibits very high transmittance. The absorption observed at wavelengths 1100 to 1600 nm corresponds to the absorption peaks (saturable absorption) characteristic of Co²⁺ ions, and indicates that this special absorption can be exploited to enable Q switching for lasers in the 1.4 to 1.7 µm band. As shown in Fig. 3, single-crystal materials exhibit substantial optical strain inside the material, where Co ions are unevenly distributed. Single-crystal materials lack therefore sufficient capability as Q switches.

### <Embodiment 7>

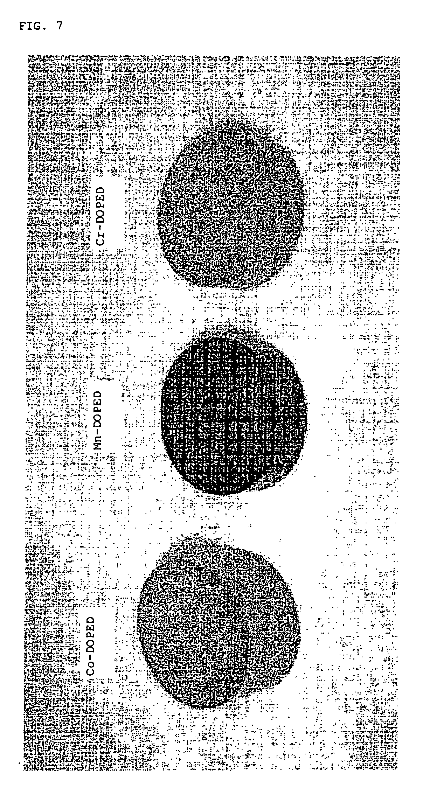

Fig. 7 shows the external view of color filter ceramics obtained through doping of 0.03wt% of Co₃O₄ (blue), 0.02wt% of TiO₂ (green) and 0.2wt% of Cr₂O₃ (pink). All samples are transparent and exhibit light absorption in accordance with the respective coloring.

### <Embodiment 8>

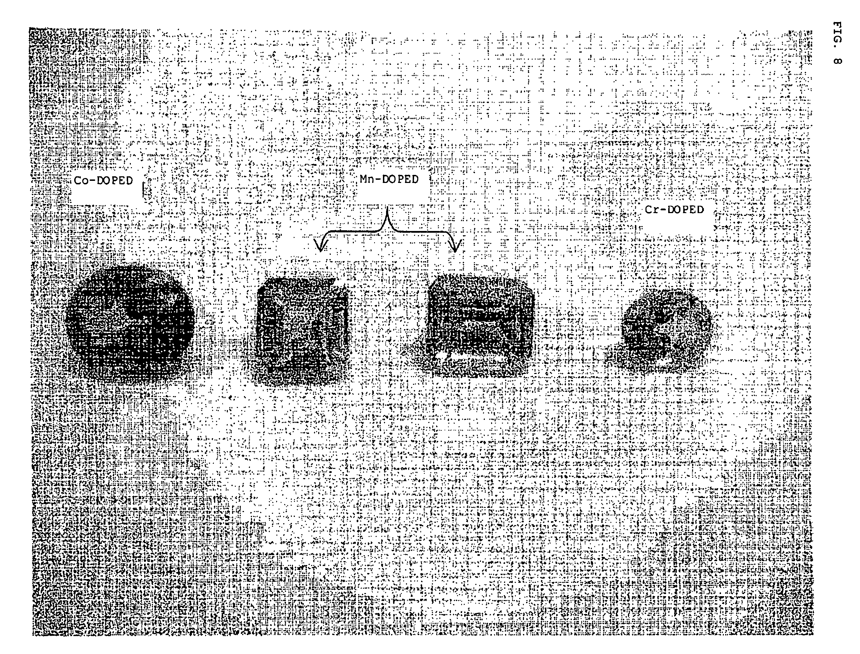

Fig. 8 shows the outer appearance of cut stones obtained by manufacturing transparent spinel ceramics containing Co, Cr and Mn, as in Fig. 7, and worked into jewelry articles. These articles, which compare favorably with natural spinels and single-crystal spinels synthesized artificially, boast characteristics that were difficult to achieve in single-crystal synthesis technologies, such as unprecedented design possibilities in jewelry articles, in terms of allowing freely setting ceramics having dissimilar colorings or gradation (gradual change in color density).

### <Embodiment 9>

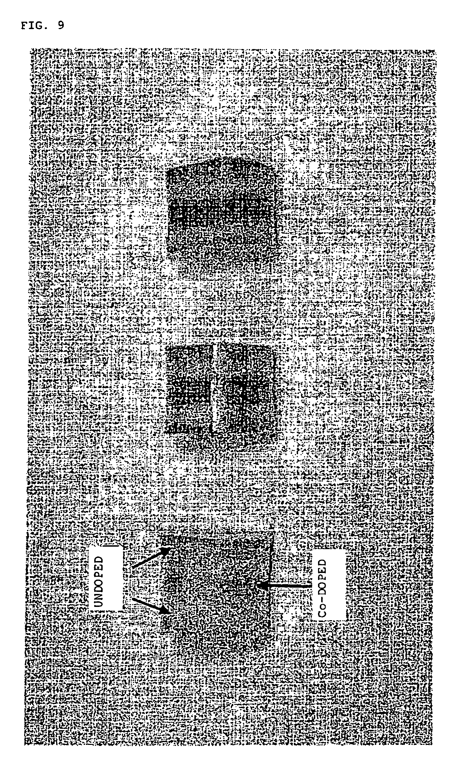

Fig. 9 shows the outer appearance of composite-type Q-switch elements comprising a three-layer structure of pure spinel/ Co-doped spinel/ pure spinel. This is the first time that freely designable Q-switch composites have been manufactured. Freely designable optical functional elements are potentially useful in all manner of applications.

### <Embodiment 10>

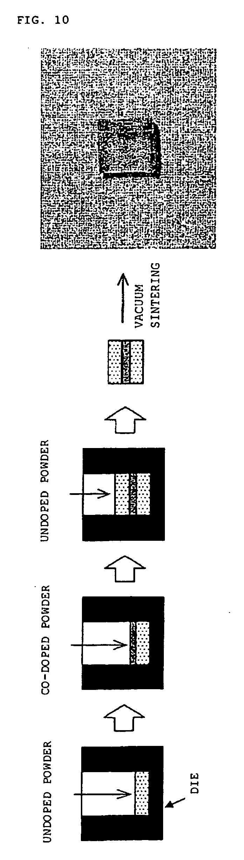

Fig. 10 illustrates schematically a method for manufacturing the multilayer Q-switch element illustrated in Fig. 9. This manufacturing method can also be used in the manufacture of, for instance, the jewelry article explained in Fig. 8, where ceramics having gradation or dissimilar colorings can be freely designed. The figure illustrates an example of the manufacture of a pure spinel/Co-doped spinel/pure spinel. A die is charged with pure spinel powder, followed by a Co-doped powder, and lastly a pure spinel powder. Pressure is then applied from above by a punch, to yield a powder compact having a three-layer structure (comprising a central (blue) Co-doped layer). The element can be manufactured easily using this powder compact and following the procedure of Fig. 1.

### Examples

The present invention will be explained in more detail next based on conventional examples and working examples. The scope of the invention, however, is not limited to such

### Examples 1 to 7 and 12 to 35 Reference examples 8 to 11 and Comparative examples 1 to 12.

Spinel ceramics were manufactured in accordance with the method illustrated in Fig. 1, using the raw materials and under the conditions as set out in Tables 1 to 5 (examples) and Tables 6 to 7 (comparative examples).

Specifically, predetermined amounts of MgF₂ and/or AlF₃ were added to spinel raw material powders, followed by addition of a dispersant and a binder. The whole was then mixed in a pot mill, to yield a mixture. The mixture was then spray-dried to yield granules having a size of several tens of µm. In primary shaping, the granules were die-molded, and were then cold isostatically pressed, in secondary shaping, to yield a compact. The obtained compact was calcined at 500 to 800°C in the air, and was then sintered (main sintering) at 1400 to 1800°C in a predetermined atmosphere. The obtained sintered body was then subjected to HIP, to yield a spinel ceramic of the present invention. The tables summarize the characteristics of the obtained spinel ceramics.

In Table 1 there vary the primary particle size of the spinel raw material as well as the spinelization ratio of the raw material; in Table 2 there vary the addition amount of MgF₂ and AlF₃ and the MgF₂/AlF₃ ratio; in Table 3 there varies the Al/Mg ratio in the spinel raw material; in Table 4 there vary the calcination temperature and atmosphere, and/or the sintering temperature and atmosphere, and/or the HIP temperature, time, pressure medium and pressure conditions; and Table 5 summarizes spinel ceramics to which color is imparted through doping with a transition metal oxide (both color and Q-switch capability imparted in the case of Co doping). All spinel ceramics are manufactured in accordance with the compositions and manufacturing conditions of the present invention. In particular, it can be seen that transmission characteristics of the spinel ceramics at the measurement wavelength of 200 nm improve dramatically when the Al/Mg ratio of the spinel raw materials in Table 3 lies within an appropriate range. Tables 6 and 7 summarize compositions, micro-structures and manufacturing conditions outside the scope of the invention, and which result in clearly poorer optical characteristics.

**Table 1**

| | Ex. 1 | Ex. 2 | Ex. 3 | Ex. 4 | Ex. 5 | Ex. 6 | Ex. 7 |
|---|---|---|---|---|---|---|---|
| Primary particle size in spinel raw material (nm) | 80 | 100 | 300 | 600 | 100 | 50 | 950 |
| Spinelization rate (%) | 80 | 90 | 90 | 90 | 90 | 70 | 99 |
| Al/Mg ratio in spinel raw material | 2.30 | 2.30 | 2.30 | 2.30 | 2.30 | 2.30 | 2.40 |
| MgF₂ addition amount (wt%) | 0.30 | 0.30 | 0.30 | 0.30 | 0.30 | 0.30 | 0.30 |
| AlF₃ addition amount (wt%) | 0.30 | 0.30 | 0.30 | 0.30 | 0.30 | 0.30 | 0.30 |
| MgF₂/AlF₃ ratio | 1.00 | 1.00 | 1.00 | 1.00 | 1.00 | 1.00 | 1.00 |
| Calcination | 500 | 600 | 600 | 600 | 600 | 600 | 600 |
| temperature (°C) | | | | | | | |
| Atmosphere | Air | Air | Air | Air | Air | Air | Air |

| Sintering | | | | | | | |
|---|---|---|---|---|---|---|---|
| Temperature (°C) | 1500 | 1500 | 1500 | 1500 | 1500 | 1500 | 1500 |
| Time (h) | 2 | 2 | 2 | 2 | 2 | 2 | 2 |
| Atmosphere | Vacuum | Vacuum | Vacuum | Vacuum | Vacuum | Vacuum | Vacuum |
| Relative density (%) after firing | 99 | 99 | 98 | 96 | 98 | 98 | 92 |

| HIP conditions | | | | | | | |
|---|---|---|---|---|---|---|---|
| Temperature (°C) | 1780 | 1780 | 1780 | 1780 | 1780 | 1780 | 1780 |
| Time (h) | 2 | 2 | 2 | 2 | 2 | 2 | 2 |
| Pressure medium | Ar | Ar | Ar | Ar | Ar | Ar | Ar |
| Pressure (MPa) | 98 | 98 | 98 | 98 | 98 | 98 | 98 |
| Average grain size in sintered body (µm) | 150 | 80 | 50 | 20 | 80 | 90 | 5 |

| Transmittance (%) | | | | | | | |
|---|---|---|---|---|---|---|---|
| @200 nm | 35 | 40 | 38 | 33 | 36 | 25 | 19 |
| @600 nm | 84 | 85 | 85 | 84 | 85 | 85 | 84 |
| @3200 nm | 86 | 86 | 86 | 86 | 86 | 86 | 85 |
| Internal loss (%) @1000 nm | 3.0 | 0.5 | 2.1 | 3.3 | 2.6 | 1.3 | 4.2 |
| Refractive index variation Δn | 1×10⁻⁴ | 1×10⁻⁵ | 5×10⁻⁵ | 5×10⁻⁵ | 1×10⁻⁴ | 5×10⁻⁵ | 1×10⁻⁴ |

**Table 2**

| Table 2 | | | | | | | |
|---|---|---|---|---|---|---|---|
| | Reference Ex. 8 | Reference Ex. 9 | Reference Ex. 10 | Reference Ex. 11 | Ex. 12 | Ex. 13 | Ex. 14 |
| Primary particle size in spinel raw material (nm) | 100 | 100 | 100 | 100 | 100 | 100 | 100 |
| Spinelization rate (%) | 90 | 90 | 90 | 90 | 90 | 90 | 90 |
| Al/Mg ratio in spinel raw material | 2.30 | 2.30 | 2.30 | 2.30 | 2.30 | 2.30 | 2.30 |
| MgF₂ addition amount (wt%) | 1.50 | 0.70 | 0 | 0 | 0.10 | 0.50 | 0.45 |
| AlF₃ addition amount (wt%) | 0 | 0.10 | 0.70 | 1.50 | 0.50 | 0.10 | 0.50 |
| MgF₂/AlF₃ ratio | ∞ | 7.00 | 0.14 | 0 | 0.20 | 5.00 | 0.90 |
| Calcination | 500 | 600 | 600 | 600 | 600 | 600 | 600 |
| Temperature (°C) | | | | | | | |
| Atmosphere | Air | Air | Air | Air | Air | Air | Air |

| Sintering | | | | | | | |
|---|---|---|---|---|---|---|---|
| temperature (°C) | 1550 | 1550 | 1550 | 1550 | 1550 | 1550 | 1550 |
| Time (h) | 2 | 2 | 2 | 2 | 2 | 2 | 2 |
| Atmosphere | Vacuum | Vacuum | Vacuum | Vacuum | Vacuum | Vacuum | Vacuum |
| Relative density (%) after sintering | 98 | 99 | 98 | 98 | 98 | 99 | 98 |

| HIP conditions | | | | | | | |
|---|---|---|---|---|---|---|---|
| Temperature (°C) | 1780 | 1780 | 1780 | 1780 | 1780 | 1780 | 1780 |
| Time (h) | 2 | 2 | 2 | 2 | 2 | 2 | 2 |
| Pressure medium | Ar | Ar | Ar | Ar | Ar | Ar | Ar |
| Pressure (MPa) | 98 | 98 | 98 | 98 | 98 | 98 | 98 |
| Average grain size in sintered body (µm) | 240 | 160 | 140 | 80 | 50 | 40 | 60 |

| Transmittance (%) | | | | | | | |
|---|---|---|---|---|---|---|---|
| @200 nm | 5 | 4 | 6 | 5 | 29 | 35 | 33 |
| @600 nm | 74 | 77 | 78 | 74 | 80 | 80 | 82 |
| @3200 nm | 76 | 79 | 80 | 76 | 82 | 82 | 84 |
| Internal loss (%) @1000 nm | 9.8 | 6.5 | 5.1 | 9.9 | 4.4 | 3.5 | 2.2 |
| Refractive index variation Δn | 5×10⁻⁴ | 1×10⁻³ | 5×10⁻⁴ | 1×10⁻³ | 1×10⁻⁴ | 1×10⁻⁴ | 5×10⁻⁵ |

**Table 3**

| | Ex. 15 | Ex. 16 | Ex. 17 | Ex. 18 | Ex. 19 | Ex. 20 | Ex. 21 |
|---|---|---|---|---|---|---|---|
| Primary particle size in spinel raw material (nm) | 100 | 100 | 100 | 100 | 100 | 100 | 100 |
| Spinelization rate (%) | 90 | 90 | 90 | 90 | 90 | 90 | 90 |
| Al/Mg ratio in spinel raw material | 1.60 | 1.90 | 2.40 | 2.20 | 2.10 | 2.01 | 1.95 |
| MgF₂ addition amount (wt%) | 0.30 | 0.30 | 0.30 | 0.30 | 0.30 | 0.30 | 0.30 |
| AlF₃ addition amount (wt%) | 0.30 | 0.30 | 0.30 | 0.30 | 0.30 | 0.30 | 0.30 |
| MgF₂/AlF₃ ratio | 1.00 | 1.00 | 1.00 | 1.00 | 1.00 | 1.00 | 1.00 |
| Calcination Temperature (°C) Atmosphere | 600 Air | 600 Air | 600 Air | 600 Air | 600 Air | 600 Air | 600 Air |

| Sintering | | | | | | | |
|---|---|---|---|---|---|---|---|
| temperature (°C) | 1550 | 1550 | 1550 | 1550 | 1550 | 1550 | 1550 |
| Time (h) | 2 | 2 | 2 | 2 | 2 | 2 | 2 |
| Atmosphere | Vacuum | Vacuum | Vacuum | Vacuum | Vacuum | Vacuum | Vacuum |
| Relative density (%) after sintering | 99 | 98 | 96 | 98 | 99 | 99 | 99 |

| HIP conditions | | | | | | | |
|---|---|---|---|---|---|---|---|
| Temperature (°C) | 1780 | 1780 | 1780 | 1780 | 1780 | 1780 | 1780 |
| Time (h) | 2 | 2 | 2 | 2 | 2 | 2 | 2 |
| Pressure medium | Ar | Ar | Ar | Ar | Ar | Ar | Ar |
| Pressure (MPa) | 98 | 98 | 98 | 98 | 98 | 98 | 98 |
| Average grain size in sintered body (µm) | 80 | 70 | 60 | 190 | 50 | 50 | 60 |

| Transmittance (%) | | | | | | | |
|---|---|---|---|---|---|---|---|
| @200 nm | 10 | 4 | 5 | 51 | 68 | 75 | 78 |
| @600 nm | 83 | 85 | 81 | 83 | 85 | 85 | 85 |
| @3200 nm | 84 | 85 | 82 | 84 | 85 | 86 | 86 |
| Internal loss (%) @1000 nm | 2.5 | 1.1 | 3.6 | 1.8 | 1.0 | 0.5 | 0.5 |
| Refractive index variation Δn | 5×10⁻⁵ | 1×10⁻⁴ | 1×10⁻⁴ | 5×10⁻⁵ | 5×10⁻⁶ | 1×10⁻⁶ | 1×10⁻⁶ |

**Table 4**

| | Ex. 22 | Ex. 23 | Ex. 24 | Ex. 25 | Ex. 26 | Ex. 27 | Ex. 28 |
|---|---|---|---|---|---|---|---|
| Primary particle size in spinel raw material (nm) | 100 | 100 | 100 | 100 | 100 | 100 | 100 |
| Spinelization rate (%) | 90 | 90 | 90 | 90 | 90 | 90 | 90 |
| Al/Mg ratio in spinel raw material | 2.10 | 2.10 | 2.10 | 2.10 | 2.10 | 2.10 | 2.10 |
| MgF₂ addition amount (wt%) | 0.30 | 0.30 | 0.30 | 0.30 | 0.30 | 0.30 | 0.30 |
| AlF₃ addition amount (wt%) | 0.30 | 0.30 | 0.30 | 0.30 | 0.30 | 0.30 | 0.30 |
| MgF₂/AlF₃ ratio | 1.00 | 1.00 | 1.00 | 1.00 | 1.00 | 1.00 | 1.00 |
| Calcination | 500 | 800 | 600 | 600 | 600 | 600 | 600 |
| Temperature (°C) | | | | | | | |
| Atmosphere | Air | O₂ | Air | Air | N₂ | Air | Air |

| Sintering | | | | | | | |
|---|---|---|---|---|---|---|---|
| temperature (°C) | 1550 | 1550 | 1550 | 1550 | 1420 | 1790 | 1550 |
| Time (h) | 2 | 2 | 2 | 2 | 6 | 0.5 | 2 |
| Atmosphere | Vacuum | Vacuum | Vacuum | Vacuum | Vacuum | Vacuum | Vacuum |
| Relative density (%) after sintering | 99 | 98 | 96 | 98 | 95 | 99 | 99 |

| HIP conditions | | | | | | | |
|---|---|---|---|---|---|---|---|
| Temperature (°C) | 1780 | 1780 | 1950 | 1850 | 1780 | 1780 | 1780 |
| Time (h) | 2 | 2 | 2 | 4 | 2 | 2 | 2 |
| Pressure medium | Ar | Ar | Ar | Ar | Ar | Ar | 20%O₂ -80%Ar |
| Pressure (MPa) | 98 | 98 | 198 | 98 | 98 | 98 | 98 |
| Average grain size in sintered body (µm) | 50 | 50 | 80 | 70 | 50 | 50 | 60 |

| Transmittance (%) | | | | | | | |
|---|---|---|---|---|---|---|---|
| @200 nm | 61 | 64 | 66 | 63 | 55 | 50 | 57 |
| @600 nm | 84 | 84 | 85 | 85 | 85 | 85 | 83 |
| @3200 nm | 85 | 85 | 86 | 86 | 85 | 85 | 84 |
| Internal loss (%) @1000 nm | 1.0 | 1.0 | 0.2 | 0.4 | 1.0 | 1.0 | 2.0 |
| Refractive index variation Δn | 1×10⁻⁵ | 1×10⁻⁵ | 5×10⁻⁶ | 5×10⁻⁶ | 1×10⁻⁶ | 5×10⁻⁵ | 1×10⁻⁵ |

**Table 5**

| | Ex. 29 | Ex. 30 | Ex. 31 | Ex. 32 | Ex. 33 | Ex. 34 | Ex. 35 |
|---|---|---|---|---|---|---|---|
| Primary particle size in spinel raw material (nm) | 100 | 100 | 100 | 100 | 100 | 100 | 100 |
| Spinelization rate (%) | 90 | 90 | 90 | 90 | 90 | 90 | 90 |
| Al/Mg ratio in spinel raw material | 2.20 | 2.20 | 2.20 | 2.20 | 2.20 | 2.20 | 2.20 |
| Transition metal oxide | Co₃O₄ | Co₃O₄ | Co₃O₄ | V₂O₅ | Fe₂O₃ | Cr₂O₃ | Cr₂O₃ |
| Amount (wt%) | 0.01 | 0.03 | 0.05 | 0.10 | 0.10 | 0.15 | 0.15 |
| Color | Blue | Blue | Blue | Green | Red | Pink | Pink |
| MgF₂ addition amount (wt%) | 0.30 | 0.30 | 0.30 | 0.30 | 0.30 | 0.30 | 0.30 |
| AlF₃ addition amount (wt%) | 0.30 | 0.30 | 0.30 | 0.30 | 0.30 | 0.30 | 0.30 |
| MgF₂/AlF₃ ratio | 1.00 | 1.00 | 1.00 | 1.00 | 1.00 | 1.00 | 1.00 |
| Calcination | 600 | 600 | 600 | 600 | 600 | 600 | 600 |
| Temperature (°C) | | | | | | | |
| Atmosphere | Air | Air | Air | Air | Air | Air | Air |

| Sintering | | | | | | | |
|---|---|---|---|---|---|---|---|
| temperature (°C) | 1550 | 1550 | 1550 | 1550 | 1550 | 1550 | 1550 |
| Time (h) | 2 | 2 | 2 | 2 | 2 | 2 | 2 |
| Atmosphere | Vacuum | Vacuum | Vacuum | Vacuum | Vacuum | Vacuum | Vacuum |
| Relative density (%) after sintering | 98 | 98 | 99 | 98 | 98 | 97 | 98 |

| HIP conditions | | | | | | | |
|---|---|---|---|---|---|---|---|
| Temperature (°C) | 1780 | 1780 | 1780 | 1780 | 1780 | 1780 | 1780 |
| Time (h) | 2 | 2 | 2 | 2 | 2 | 2 | 2 |
| Pressure medium | Ar | Ar | Ar | Ar | Ar | Ar | Ar |
| Pressure (MPa) | 98 | 98 | 98 | 98 | 98 | 98 | 98 |
| Transmittance (%) | | | | | | | |
| Visible baseline t=5 mm | 85 | 85 | 85 | 84 | 85 | 85 | 85 |
| Refractive index variation Δn | ≤ 1×10⁻⁴ | ≤ 1×10⁻⁴ | ≤ 1×10⁻⁴ | - | - | - | - |
| Q-switching for 1.5 µm laser | Possible | Possible | Possible | - | - | - | - |

**Table 6**

| | Comp. ex. 1 | Comp. ex. 2 | Comp. ex. 3 | Comp. ex. 4 | Comp. ex. 5 | Comp. ex. 6 | Comp. ex. 7 |
|---|---|---|---|---|---|---|---|
| Primary particle size in spinel raw material (nm) | 1500 | 3000 | 70 | 100 | 100 | 100 | 100 |
| Spinelization rate (%) | 95 | 99 | 55 | 90 | 90 | 90 | 90 |
| Al/Mg ratio in spinel raw material | 2.15 | 2.10 | 2.10 | 2.55 | 1.50 | 2.10 | 2.10 |
| MgF₂ addition amount (wt%) | 0.30 | 0.30 | 0.30 | 0.30 | 0.30 | 1.25 | 0.03 |
| AlF₃ addition amount (wt%) | 0.30 | 0.30 | 0.30 | 0.30 | 0.30 | 0.15 | 0.04 |
| MgF₂/AlF₃ ratio | 1.00 | 1.00 | 1.00 | 1.00 | 1.00 | 8.33 | 0.75 |
| Calcination | 600 | 600 | 600 | 600 | 600 | 600 | 600 |
| Temperature (°C) | | | | | | | |
| Atmosphere | Air | Air | Air | Air | Air | Air | Air |
| Sintering | | | | | | | |
| temperature (°C) | 1550 | 1550 | 1550 | 1550 | 1550 | 1550 | 1550 |
| Time (h) | 2 | 2 | 2 | 2 | 2 | 2 | 2 |
| Atmosphere | Vacuum | Vacuum | Vacuum | Vacuum | Vacuum | Vacuum | Vacuum |
| Relative density (%) after firing | 89 | 88 | 84 | 96 | 95 | 97 | 94 |

| HIP conditions | | | | | | | |
|---|---|---|---|---|---|---|---|
| Temperature (°C) | 1780 | 1780 | 1780 | 1780 | 1780 | 1780 | 1780 |
| Time (h) | 2 | 2 | 2 | 2 | 2 | 2 | 2 |
| Pressure medium | Ar | Ar | Ar | Ar | Ar | Ar | Ar |
| Pressure (MPa) | 98 | 98 | 98 | 98 | 98 | 98 | 98 |
| Average grain size in sintered body (µm) | 4 | 5 | 280 | 60 | 40 | 350 | 3 |

| Transmittance (%) | | | | | | | |
|---|---|---|---|---|---|---|---|
| @200 nm | 0 | 0 | 0 | 0 | 3 | 1 | 0 |
| @600 nm | 3 | 2 | 25 | 55 | 32 | 11 | 35 |
| @3200 nm | 6 | 4 | 48 | 74 | 48 | 21 | 55 |
| Internal loss (%) @1000 nm | 80.0 | 82.0 | 61.0 | 31.0 | 54.0 | 75.0 | 51.0 |
| Refractive index variation Δn | Not measurab le | Not measurab le | Not measura ble | Not measur able | Not measur able | Not measur able | Not measur able |

**Table 7**

| | Comp. ex. 8 | Comp. ex. 9 | Comp. ex. 10 | Comp. ex. 11 | Comp. ex. 12 |
|---|---|---|---|---|---|
| Primary particle size in spinel raw material (nm) | 150 | 150 | 150 | 150 | 150 |
| Spinelization rate (%) | 95 | 95 | 95 | 95 | 95 |
| Al/Mg ratio in spinel raw material | 2.10 | 2.10 | 2.10 | 2.10 | 2.10 |
| MgF₂ addition amount (wt%) | 0.30 | 0.30 | 0.30 | 0.30 | 0.30 |
| AlF₃ addition amount (wt%) | 0.30 | 0.30 | 0.30 | 0.30 | 0.30 |
| MgF₂/AlF₃ ratio | 1.00 | 1.00 | 1.00 | 1.00 | 1.00 |
| Calcination Temperature (°C) | 400 | 900 | 600 | 600 | 600 |
| Atmosphere | Air | Air | Air | Air | Air |

| Sintering | | | | | |
|---|---|---|---|---|---|
| temperature (°C) | 1550 | 1550 | 1380 | 1850 | 1550 |
| Time (h) | 2 | 2 | 10 | 1 | 2 |
| Atmosphere | Vacuum | Vacuum | Vacuum | Vacuum | Vacuum |
| Relative density (%) after sintering | 98 | 97 | 86 | 99 | 98 |
| HIP conditions | | | | | |
| Temperature (°C) | 1780 | 1780 | 1780 | 1780 | 1450 |
| Time (h) | 2 | 2 | 2 | 2 | 5 |
| Pressure medium | Ar | Ar | Ar | Ar | Ar |
| Pressure (MPa) | 98 | 98 | 98 | 98 | 196 |

| Transmittance (%) | | | | | |
|---|---|---|---|---|---|
| @200 nm | 0 | 3 | 0 | 2 | 0 |
| @600 nm | 20 | 56 | 1 | 25 | 2 |
| @3200 nm | 29 | 78 | 2 | 38 | 5 |
| Internal loss (%) @1000 nm | 66.0 | 30.0 | 85.0 | 61.0 | 84.0 |
| Refractive index variation Δn | Not measurab le | Not measurab le | Not measurab le | Not measur able | Not measur able |

### INDUSTRIAL APPLICABILITY

The spinel ceramic according to the present invention can be used in UV transmissive materials employed in semiconductor lithography, in ceramic optics such as lenses and prisms, in transmissive materials to visible and infrared radiation, in thermal diffusion plates of LCD rear projectors, in color filter materials, in jewelry articles, as well as in active Q-switch elements in the mid infrared region (eye-safe region). The spinel ceramic of the present invention can further be used in optical devices comprising these superior elements, for instance steppers, cameras, optical measurement instruments or the like, and in LCD rear projectors, visible to infrared detectors, missile domes, as well as Q-switch pulsed laser fibers and laser devices.

### BRIEF DESCRIPTION OF THE DRAWINGS

Fig. 1 is a manufacturing process diagram of a spinel ceramic (polycrystalline transparent laser medium);
Fig. 2 is a set of manufacturing process diagrams of articles of the ceramic of the present invention, wherein Fig. 2(a) illustrates a manufacturing process diagram of a dome, Fig. 2(b) illustrates that of a lens and Fig. 2(c) illustrates that of a prism;
Fig. 3 illustrates outer appearance photographs, observations of strain gauge birefringence, and wavefront image by a Fizeau interferometer, for prepared spinel ceramics (after polishing);
Fig. 4 illustrates transmission spectra of spinel ceramics in the visible to the infrared regions, for samples 1 mm, 3 mm and 11 mm thick and having both faces optically polished;
Fig. 5 illustrates transmission spectra of spinel ceramics 10 mm thick at wavelengths from 300 to 190 nm, such that in sample A, Al/Mg is 2.3, in sample B, Al/Mg is 2.05 and in sample C, Al/Mg is 1.99;
Fig. 6 illustrates a transmission spectrum of a spinel ceramic doped with 0.01wt% of Co₃O₄;
Fig. 7 shows the outer appearance of color filter spinel ceramics doped with Co (blue), Cr (green) and Mn (red);
Fig. 8 shows the outer appearance of jewelry articles manufactured through cutting of transparent spinel ceramics doped with Co, Cr and Mn;
Fig. 9 shows the outer appearance of a composite Q-switch element comprising pure spinel/Co-doped spinel/pure spinel; and
Fig. 10 illustrates a manufacturing process of the composite Q-switch element illustrated in Fig. 9.

## Claims

1. A transparent spinel ceramic:
(1) having a crystal structure substantially consisting of spinel cubic crystals;
(2) having an average grain size of 5 to 250 µm; and
(3) having, when formed into a sample having a thickness of 10mm, an in-line transmittance of 70% or more based on the baseline of transmission spectrum, at wavelengths of 600 nm and 3200 nm, in a thickness direction of the sample,
(4) comprising MgF₂ and AlF₃, wherein the weight ratio for MgF₂ / AlF₃ ranges from 0.2 to 5.0, and
(5) wherein the Al/Mg atomic ratio in the overall ceramic ranges from 2.4 to 1.6.

2. The transparent spinel ceramic according to claim 1, comprising 0.1 to 1.5wt% of MgF₂ and AlF₃.

3. The transparent spinel ceramic according to claim 1, comprising more than 0wt% and not more than 1wt% of a transition metal oxide.

4. The transparent spinel ceramic according to claim 3, which is colored in the visible region.

5. The transparent spinel ceramic according to claim 1, having an internal loss not greater than 10% / cm for light having a wavelength of 1000 nm.

6. The transparent spinel ceramic according to claim 1, having birefringence not greater than 1% by a strain inspection instrument, and having a refractive index variation Δn, in use of an interferometer, not greater than 10⁻³, over 90% or more of a measurement surface.

7. The transparent spinel ceramic according to claim 1, having Q-switching function of laser having an oscillation wavelength in a 1.3 to 1.7 µm region.

8. The transparent spinel ceramic according to claim 1, having, when formed into a sample having a thickness of 10 mm, an in-line transmittance of 50% or more based on the baseline of transmission spectrum, at a wavelength of 200 nm, in a thickness direction of the sample.

9. An optical material, comprising the transparent spinel ceramic according to claim 1.

10. A decorative material, comprising the transparent spinel ceramic according to claim 1.

11. A method for manufacturing a transparent spinel ceramic according to claim 1, comprising:
(1) a first step of obtaining a powder compact by molding a spinel-containing powder having an average primary particle size of 50 to 1000 nm and comprising MgF₂ and AlF₃;
(2) a second step of obtaining a calcined body by calcining said powder compact at 500 to 800°C;
(3) a third step of obtaining a fired body by sintering the calcined body at 1400 to 1800°C; and
(4) a fourth step of obtaining a pressed sintered body by high-pressure sintering of the fired body at 1500 to 2000°C.

12. The manufacturing method according to claim 11, wherein the spinelization ratio in said spinel-containing powder is not lower than 70wt%.

## Patentansprüche

1. Transparente Spinellkeramik:
(1) die eine Kristallstruktur aufweist, die im Wesentlichen aus kubischen Spinellkristallen gebildet ist;
(2) die eine durchschnittliche Korngröße von 5 bis 250 µm aufweist; und
(3) die, wenn sie zu einer Probe mit einer Dicke von 10 mm geformt wird, bei Wellenlängen von 600 nm und 3200 nm in Richtung der Dicke der Probe eine gerichtete Lichtdurchlässigkeit von 70% oder mehr basierend auf dem Basiswert des Transmissionsspektrums aufweist,
(4) die MgF₂ und AlF₃ umfasst, wobei das Gewichtsverhältnis für MgF₂/AlF₃ im Bereich von 0,2 bis 5,0 liegt, und
(5) wobei das Al/Mg-Atomverhältnis in der gesamten Keramik im Bereich von 2,4 bis 1,6 liegt.

2. Transparente Spinellkeramik nach Anspruch 1, umfassend 0,1 bis 1,5 Gew.-% MgF₂ und AlF₃.

3. Transparente Spinellkeramik nach Anspruch 1, umfassend mehr als 0 Gew.-% und nicht mehr als 1 Gew.-% eines Übergangsmetalloxids.

4. Transparente Spinellkeramik nach Anspruch 3, die im sichtbaren Bereich gefärbt ist.

5. Transparente Spinellkeramik nach Anspruch 1, die einen internen Verlust von nicht mehr als 10%/cm für Licht mit einer Wellenlänge von 1000 nm aufweist.

6. Transparente Spinellkeramik nach Anspruch 1, die eine Doppelbrechung durch ein Spannungsprüfungsinstrument von nicht mehr als 1% aufweist und die bei Verwendung eines Interferometers eine Brechungsindexveränderung Δn von nicht mehr als 10⁻³ über 90% oder mehr einer Messoberfläche aufweist.

7. Transparente Spinellkeramik nach Anspruch 1, die eine Güteschalterfunktion eines Lasers mit einer Oszillationswellenlänge in einem Bereich von 1,3 bis 1,7 µm aufweist.

8. Transparente Spinellkeramik nach Anspruch 1, die, wenn sie zu einer Probe mit einer Dicke von 10 mm geformt wird, bei einer Wellenlänge von 200 nm in Richtung der Dicke der Probe eine gerichtete Lichtdurchlässigkeit von 50% oder mehr basierend auf dem Basiswert des Transmissionsspektrums aufweist.

9. Optisches Material, umfassend die transparente Spinellkeramik nach Anspruch 1.

10. Dekoratives Material, umfassend die transparente Spinellkeramik nach Anspruch 1.

11. Verfahren zur Herstellung einer transparenten Spinellkeramik nach Anspruch 1, umfassend:
(1) einen ersten Schritt des Herstellens eines Pulverpresskörpers durch Formen eines spinellhaltigen Pulvers mit einer durchschnittlichen primären Partikelgröße von 50 bis 1000 nm, das MgF₂ und AlF₃ enthält;
(2) einen zweiten Schritt des Herstellens eines kalzinierten Körpers, indem der Pulverpresskörper bei 500 bis 800°C kalziniert wird;
(3) einen dritten Schritt des Herstellens eines gebrannten Körpers, indem der kalzinierte Körper bei 1400 bis 1800°C gesintert wird; und
(4) einen vierten Schritt des Herstellens eines gepressten Sinterkörpers durch Hochdrucksintern des gebrannten Körpers bei 1500 bis 2000°C.

12. Herstellungsverfahren nach Anspruch 11, wobei das Spinellisierungsverhältnis des spinellhaltigen Pulvers nicht niedriger als 70 Gew.-% ist.

## Revendications

1. Une céramique spinelle transparente :
(1) ayant une structure en cristal se composant principalement de cristaux cubiques de spinelle ;
(2) ayant une taille moyenne de grain de 5 à 250 µm ; et
(3) ayant, lorsqu'ils sont formés en un échantillon une épaisseur de 10 mm, une transmittance en ligne de 70% ou plus, basée sur la ligne de base du spectre de transmission, à des longueurs d'onde de 600 nm et 3 200 nm, dans le sens de l'épaisseur de l'échantillon,
(4) comprenant MgF₂ et AlF₃, où le rapport pondéral pour MgF₂/AlF₃ s'étend de 0,2 à 5,0, et
(5) où le rapport atomique Al/Mg dans l'ensemble de la céramique s'étend de 2,4 à 1,6.

2. La céramique spinelle transparente selon la revendication 1, comprenant un pourcentage pondéral de 0,1 à 1,5 de MgF₂ et AlF₃.

3. La céramique spinelle transparente selon la revendication 1, comprenant un pourcentage pondéral supérieur à 0 et inférieur ou égal à 1 d'un oxyde de métal de transition.

4. La céramique spinelle transparente selon la revendication 3, qui est colorée dans la région visible.

5. La céramique spinelle transparente selon la revendication 1, ayant une perte interne inférieure ou égale à 10% / cm pour de la lumière ayant une longueur d'onde de 1000 nm.

6. La céramique spinelle transparente selon la revendication 1, ayant une biréfringence non supérieure à 1% par un instrument d'inspection de déformation, et ayant un indice de variation réfractive Δn, lors de l'utilisation d'un interféromètre, non supérieur à 10⁻³, plus de 90% d'une surface de mesure.

7. La céramique spinelle transparente selon la revendication 1, ayant une fonction de commutation Q de laser ayant une longueur d'onde d'oscillation dans une zone de 1,3 à 1,7 µm.

8. La céramique spinelle transparente selon la revendication 1, ayant, lorsqu'elle est formée en échantillon, une épaisseur de 10 mm, une transmittance en ligne de 50% ou plus basé sur la ligne de base du spectre de transmission, à une longueur d'onde de 200 nm, dans le sens de l'épaisseur de l'échantillon.

9. Un matériau optique, comprenant la céramique spinelle transparente selon la revendication 1.

10. Un matériau décoratif, comprenant la céramique spinelle transparente selon la revendication 1.

11. Une méthode de fabrication d'une céramique spinelle transparente selon la revendication 1, comprenant :
(1) une première étape d'obtention d'une poudre compacte en moulant une poudre contenant de la spinelle ayant une taille de particule primaire moyenne de 50 à 1000 nm et comprenant MgF₂ et AlF₃ ;
(2) une deuxième étape d'obtention d'un corps calciné en calcinant ladite poudre compacte de 500 à 800°C ;
(3) une troisième étape d'obtention d'un corps cuit en frittant le corps calciné de 1400 à 1800 °C ; et
(4) une quatrième étape d'obtention d'un corps fritté pressé par frittage haute pression du corps cuit de 1500 à 2000°C.

12. La méthode de fabrication selon la revendication 11, où le taux de spinellisation dans ladite poudre contenant de la spinelle n'est pas inférieur à un pourcentage pondéral de 70.
